# EUROPÄISCHE PATENTSCHRIFT

(11) **EP 2 707 614 B1**
(45) Veröffentlichungstag und Bekanntmachung des Hinweises auf die Patenterteilung: **04.04.2018**
(21) Anmeldenummer: 12724867.2
(22) Anmeldetag: 24.04.2012
(51) Int. Cl.: F16D 1/072, F16D 1/10, B21J 15/12, B21J 15/14, B21K 25/00

(54) **STECKVERBINDUNG ZUR DREHSCHLÜSSIGEN VERBINDUNG ZWEIER BAUTEILE UND VERFAHREN**
PLUG CONNECTOR FOR ROTATIONALLY CONNECTING TWO COMPONENTS AND METHOD THEREFOR
LIAISON PAR EMBOÎTEMENT POUR LA LIAISON SOLIDAIRE EN ROTATION DE DEUX PIÈCES ET SON PROCÉDÉ

(30) Priorität: 11.05.2011 DE 102011101152
(43) Veröffentlichungstag der Anmeldung: 19.03.2014
(73) Patentinhaber: Schaeffler Technologies AG & Co. KG, 91074 Herzogenaurach (DE)
(72) Erfinder: HOPPE, Marcus, 77855 Achern (DE); PATZE, Steffen, 77815 Bühl (DE); STEFFEN, Cyriaque, 67500 Haguenau (FR)
(86) Internationale Anmeldenummer: PCT/DE2012/000419
(87) Internationale Veröffentlichungsnummer: WO 2012/152245

(56) Entgegenhaltungen:
- WO-A1-03/070398
- DE-A1- 3 248 197
- DE-A1-102007 028 258
- DE-A1-102008 027 443
- DE-A1-102010 050 462
- JP-A- 8 290 224
- US-A- 5 579 568
- US-A1- 2001 026 727

## Beschreibung

Die Erfindung betrifft eine Steckverbindung zur drehschlüssigen Verbindung zweier Bauteile gemäß Patentanspruch 1 und ein Verfahren zur Herstellung einer drehschlüssigen Verbindung gemäß Patentanspruch 8.

Aus DE 10 2008 027 443 A1 ist ein Kupplungsaggregat mit einer gattungsbildenden Steckverbindung bekannt. Die Steckverbindung ist als Steckverzahnung ausgebildet, wobei ein Flanschteil des Zweimassenschwungrades einen axial angeformten Ansatz aufweist, an dem ein einen eingangsseitigen Teil der Steckverbindung bildender Zahnkranz stoffschlüssig in Form einer Verschweißung aufgenommen ist. Hierbei müssen an dem Flanschteil der Ansatz angeformt und dieser sowie der Zahnkranz spanend bearbeitet werden.

Aus der DE 10 2007 028 258 A1 ist ein Schaltelement für ein Atomatgetriebe bekannt, bei dem ein Innenlamellenträger über einen Topf mit einem Planetenträger eines Radsatzes des Automatgetriebes verbunden ist. Die Verbindung wird dabei über Nietzapfen am Innenlamellenträger realisiert, die in Nietlöcher des Topfes aufgenommen und als Flachköpfe vernietet werden.

Aus der DE 32 48 197 A1 ist ferner ein Verfahren bekannt, bei dem eine Nabe in ein Zentrumloch eines Ventilatorrades aufgenommen wird. Zur Befestigung der Nabe wird eine schräg stehende Drückrolle um eine Wellenachse rotiert und so auf den über das Loch hinausragenden Werkstoff gepresst, dass dieser Werkstoff plastisch verform und in die radial offenen Aussparungen gepresst wird.

Die Aufgabe der Erfindung besteht darin, eine Weiterbildung der Steckverbindung und des Verfahrens zur Herstellung der Steckverbindung, insbesondere vor dem Hintergrund einer kostengünstigen und einfachen Fertigung bereitzustellen.

Die Aufgabe der Erfindung wird durch die Steckverbindung gemäß Anspruch 1 und durch das Verfahren gemäß Patentanspruch 8 gelöst.

Weitere vorteilhafte Ausführungsformen der Erfindung sind in den abhängigen Ansprüchen angegeben.

Die erfindungsgemäße Steckverbindung weist den Vorteil auf, dass die Steckverbindung einfach und kostengünstig hergestellt werden kann. Dies wird dadurch erreicht, dass ein Endstück eines Verbindungselementes des ersten Bauteils, das durch eine Ausnehmung des zweiten Bauteils ragt, in einem Endstück mithilfe eines Rollverfahrens breitgequetscht wird. Das Rollverfahren ermöglicht eine einfache, schnelle und kostengünstige Verbreiterung des Endstückes. Bei dem Rollverfahren wird eine Walze über das Endstück des Verbindungselementes, das aus der Ausnehmung des zweiten Bauteils herausragt vorzugsweise mithilfe einer sich drehenden Walze in den Breite gequetscht, so dass das Verbindungselement formschlüssig gegen ein Herausziehen aus der Ausnehmung gesichert ist.

Abhängig von der gewählten Ausführungsform kann die Ausnehmung seitlich offen sein. Dies kann beispielsweise die Einbildung der Ausnehmung vereinfachen.

In einer weiteren Ausführungsform ist das zweite Bauteil in Form eines Zahnkranzes ausgebildet, der insbesondere einen Mitnehmerkranz darstellt.

Besonders bei der Ausbildung des Zahnkranzes ist die beschriebene Steckverbindung kostengünstig und einfach herzustellen und sorgt zudem für eine ausreichende Befestigung des Zahnkranzes an dem ersten Bauteil.

In einer weiteren Ausführungsform weist das erste Bauteil einen Ringkranz mit Zähnen auf, wobei die Zähne aus einer Ebene des Bauteils herausragen, und wobei die Zähne die Verbindungselemente darstellen. Somit ist die Ausbildung der Verbindungselemente mithilfe einfacher formgebender Verfahren zur Herstellung von Zähnen möglich. Alternativ kann das erste Bauteil auch mehrteilig angebildet sein und einen Grundkörper aufweisen, an dem ein oder mehrere Verbindungsmittel (wie (Steh-)Nieten) befestigt sind, welche dann durch das zweite Bauteil hindurchgreifen und dann mittels des Rollverfahrens angefordert werden, um die Bauteile formschlüssig zu verbinden.

In einer weiteren Ausführungsform weist der Ringkranz zwischen den Zähnen Zahnsegmente auf, die nach oben über die Ebene des ersten Bauteils hinausragen. Damit wird eine erhöhte Stabilität der Zähne erreicht. Zudem können die zwischen den Zähnen ausgebildeten Zahnsegmente als Auflage für das zweite Bauteil dienen.

In einer weiteren Ausführungsform ist der Zahnkranz im Querschnitt abgewinkelt ausgebildet, wobei eine erste Teilfläche des Zahnkranzes im Wesentlichen parallel zur Oberseite des ersten Bauteils angeordnet ist, wobei in der ersten Teilfläche die Ausnehmungen eingebracht sind, wobei die zweite Teilfläche in Richtung auf das erste Bauteil abgewinkelt ist, und wobei auf der zweiten Teilfläche eine Zahnstruktur des Zahnkranzes ausgebildet sind. Somit wird eine stabile Ausbildung des Zahnkranzes ermöglicht, der zudem sicher und einfach mit einem Ringkranz von Zähnen formschlüssig verbunden werden kann.

In einer weiteren Ausführungsform ist der Zahnkranz auf der Innenseite ausgebildet, so dass die Zahnstruktur nach innen in Richtung eines Mittelpunktes des Zahnkranzes ragen.

In einer weiteren Ausführungsform ist der Zahnkranz auf einer Außenseite ausgebildet, wobei die Zahnstruktur in Bezug auf eine radiale Mitte nach außen ragen. Beide Ausführungsformen eignen sich, um einen stabilen Zahnkranz bereitzustellen, der mithilfe der beschriebenen Steckverbindung an einem ersten Bauteil sicher und zuverlässig befestigt werden kann.

In einer weiteren Ausführungsform liegt der Zahnkranz mit Auflageflächen auf den Zahnsegmenten auf. Dadurch wird eine stabile Auflage des Zahnkranzes am ersten Bauteil ermöglicht.

Die Aufgabe der Erfindung wird gemäß dem Verfahren nach Anspruch 8 gelöst, wobei zwei Bauteile zusammengefügt werden, indem ein Verbindungselement eines ersten Bauteils in eine Ausnehmung eines zweiten Bauteils geführt wird, wobei ein über das zweite Bauteil hinausragendes Endstück des Verbindungselementes mithilfe einer Walze, die über das Endstück gerollt wird, mit einem seitlichen Druck gegen das Endstück breitgewalzt wird, so dass das Endstück im Querschnitt verbreitert wird.

Bei dem erfindungsgemäßen Verfahren stimmt die Hauptflussrichtung des verformten Materials mit der Hauptkraftwirkungsrichtung überein. Bei Standard-Nietverfahren hingegen wird das Material quer zur Hauptkraftwirkungsrichtung'weggequetscht.

Auf diese Weise wird eine Verformung des Endstückes mithilfe eines einfachen und zuverlässigen Verfahrens erreicht, wobei die Belastung des Endstückes relativ gering ist. Zudem eignet sich das beschriebene Verfahren für eine kostengünstige Massenfertigung, da mithilfe der rollenden Walze in kurzer Zeit eine Vielzahl von Endstücken auf die gewünschte Weise verbreitert werden kann.

In einer weiteren Ausführungsform wird die Walze entlang einer Längsseite des Verbindungselementes gerollt, wobei das Verbindungselement in Form einer Lasche ausgebildet ist. Die Lasche weist eine Längsseite auf, die größer als eine Querseite ist. Die Querseite und die Längsseite sind senkrecht zur Längserstreckung des Verbindungselementes ausgebildet.

Vorzugsweise wird die relative Bewegungsrichtung zwischen der Walze und dem Bauteil, beispielsweise die Rotationsrichtung, während des Breitrollens des Endstücks gewechselt. Vorzugsweise ist eine Drehachse der Walze geneigt in radialer Richtung in Bezug auf eine mittige Rotationsachse in Richtung auf die Bauteile angeordnet.

Die Erfindung wird im Folgenden anhand der Figuren näher erläutert. Es zeigen:
- Figur 1: eine Darstellung eines ersten Bauteils,
- Figur 2: einen vergrößerten Abschnitt eines Ringkranzes des ersten Bauteils,
- Figur 3: eine Darstellung eines zweiten Bauteils,
- Figur 4: die Ausbildung einer Steckverbindung zwischen dem ersten und dem zweiten Bauteil,
- Figur 5: einen Teilquerschnitt durch die Steckverbindung der zwei Bauteile,
- Figur 6: eine schematische Darstellung einer Anordnung zur Durchführung des Verfahrens,
- Figur 7: einen schematischen Querschnitt durch ein erfindungsgemäß ausgebildetes Verbindungselement,
- Figur 8: eine Draufsicht auf ein Endstück,
- Figur 9: eine Vorrichtung zum Breitrollen eines Verbindungselements, und
- Figur 10: eine Draufsicht auf die Vorrichtung von Figur 9.

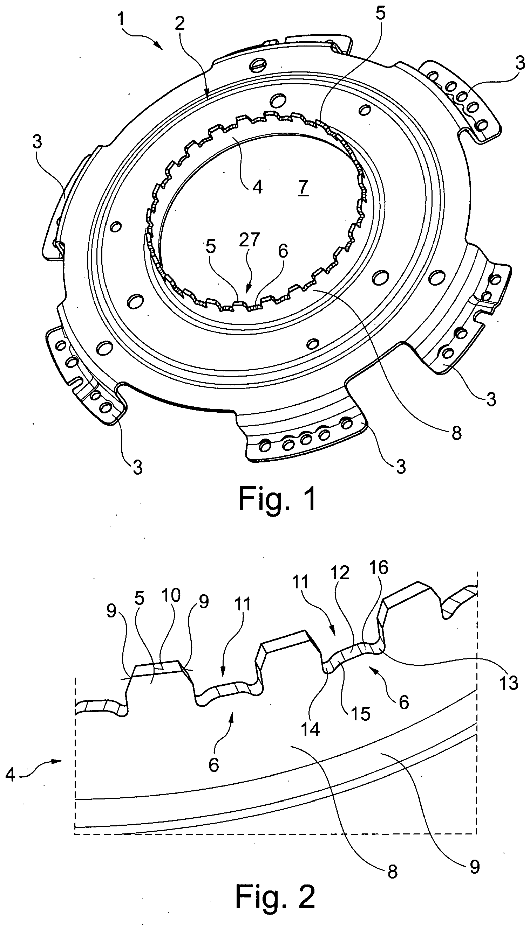

Figur 1 zeigt ein erstes Bauteil 1, das beispielsweise ein Gehäuseteil einer auf einem Getriebe angeordneten Doppelkupplung darstellt. Das erste Bauteil weist eine plattenförmige Grundform auf, die im Wesentlichen in einer Ebene angeordnet ist. Die Grundform ist in dem dargestellten Beispiel in Form einer Ringscheibe ausgebildet. An einem Außenrand der Ringscheibe 2 sind Flansche 3 verteilt um den Umfang angeordnet. Das erste Bauteil 1 weist an einem inneren Randbereich einen umlaufenden Ringkranz 4 mit Verbindungselementen 5 auf, die in Form von Zähnen ausgebildet sind. Die Verbindungselemente 5 ragen einen festgelegten Abstand über eine Oberseite der Ringscheibe 2 nach oben hervor. Abhängig von der gewählten Ausführungsform sind die Verbindungselemente 5 im rechten Winkel zur Ebene der Ringscheibe 2 ausgerichtet. Zwischen zwei Verbindungselementen 5 sind in dem dargestellten Ausführungsbeispiel Zahnsegmente 6 ausgebildet, die ebenfalls Teil des Ringkranzes 4 sind, die aber nur einen geringeren Abstand von der Ringscheibe 2 abstehen.

Der Ringkranz 4 ist beispielsweise einteilig mit der Ringscheibe 2 ausgebildet. Der Ringkranz 4 umgibt eine mittige kreisförmige Öffnung 7 der Ringscheibe 2. Der Ringkranz 4 wird beispielsweise durch Ausstanzen einer Öffnung 7 aus der Ringscheibe 2, einem anschließenden Umformen und Ziehen einer Ringkranzhülse mit einem anschließenden Herausstanzen der Verbindungselemente 5 hergestellt. Beispielsweise wird bei dem Herausstanzen ein Werkzeug verwendet, mit dem zwei Verbindungselemente 5 gleichzeitig herausgestanzt werden. Somit weisen zwei benachbarte Verbindungselemente unterschiedlich abgeschrägte Seitenflächen aufgrund des Herstellungsprozesses auf. Die Verbindungselemente 5 stellen Nietnasen dar. Abhängig von der gewählten Ausführungsform kann der Ringkranz 4 auch auf andere Weise hergestellt werden. Weiterhin kann auf die Segmente 6 verzichtet werden, so dass die Verbindungselemente 5 eine freistehende Höhe bis zur Ringscheibe 2 aufweisen. Zudem kann abhängig von der gewählten Ausführungsform der Ringkranz 4 auch auf einem Außenrand des ersten Bauteils 1 ausgebildet sein. Wenigstens die Verbindungselemente sind aus einem verformbaren Material. Beispielsweise ist das erste und das zweite Bauteil aus Blech geformt.

Der dargestellte Ringkranz 4 weist gleich breite Verbindungselemente 5 auf, die jeweils einen gleichgroßen Abstand zum benachbarten Verbindungselement 5 aufweisen. Abhängig von der gewählten Ausführungsform kann die Breite der Verbindungselemente 5 auch unterschiedlich sein und/oder die Abstände zwischen den Verbindungselementen 5 variieren. In einer einfachsten Ausführungsform kann auch nur ein einzelnes Verbindungselement 5 vorgesehen sein, das aus der Ebene der Ringscheibe 2 herausragt. Weiterhin kann der Ringkranz 4 auch in Richtung der Unterseite aus der Ebene der Ringscheibe 2 herausragen. Der Aufbau und die Funktion eines Kupplungsaggregates und insbesondere dessen Steckverbindung ist beispielsweise in DE 10 2008 027 443 A1 ausführlich beschrieben, so dass hierzu die Details nicht weiter erläutert werden.

Figur 2 zeigt eine Detailansicht eines Abschnitts des Ringkranzes 4. In einem unteren Bereich angrenzend an die Ringscheibe 2 ist der Ringkranz 4 in Form einer Hülse 8 ausgebildet. Im oberen Randbereich der Hülse 8 sind die Verbindungselemente 5 in Form von Zähnen ausgeformt. Zwischen den Verbindungselementen 5 ist jeweils ein Segment 6 ausgebildet. Die Verbindungselementen 5 weisen vorzugsweise in einem oberen Endbereich an gegenüberliegenden Querseiten zueinander geneigte Flächen 9 auf. Auf diese Weise verjüngt sich die Breite eines Verbindungselementes 5 in Richtung auf eine obere Endfläche 10. Durch das verjüngte Endstück des Verbindungselementes 5 ist ein Einführen in eine Ausnehmung eines zweiten Bauteils vereinfacht. Eine zweite Endfläche 11 eines Segmentes 6 weist vorzugsweise einen mittigen Bereich 12 auf, der höher als benachbarte Seitenbereiche 13, 14 angeordnet ist. Die Seitenbereiche 13, 14 grenzen jeweils an ein Verbindungselement 5 an. Abhängig von der gewählten Ausführungsform kann der mittige Bereich 12 über jeweils einen ersten bzw. zweiten Rundungsbereich 15, 16 in den tiefer angeordneten Seitenbereich 13, 14 übergehen. Der erste und zweite Seitenbereich 13, 14, kann ebenfalls als abgerundeter Bereich ausgebildet sein. Der mittige Bereich 12 ist vorzugsweise als plane Fläche ausgebildet. Die plane Fläche des Mittenbereiches 12 ist vorzugsweise parallel zu der Ebene der Ringscheibe 2 ausgebildet. Die Endflächen 10 sind vorzugsweise als plane Flächen ausgebildet, die parallel zur Ebene der Ringscheibe 2 angeordnet.

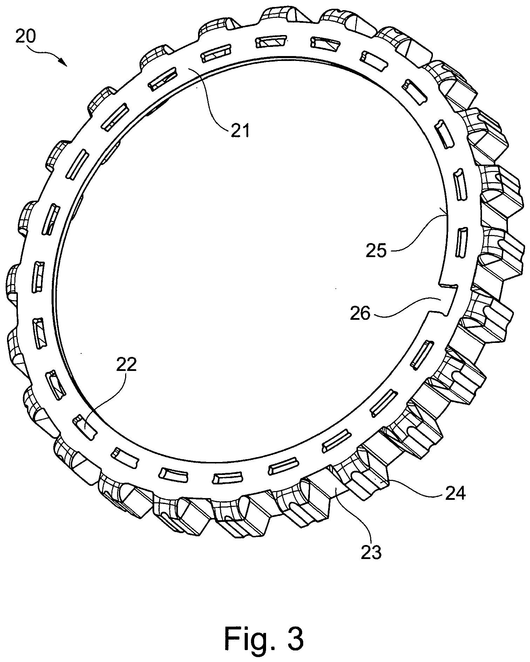

Figur 3 zeigt ein zweites Bauteil 20, das in der dargestellten Ausführungsform in Form eines Zahnkranzes, insbesondere in Form eines Mitnehmerkranzes ausgebildet ist. Das zweite Bauteil 20 kann beispielsweise einem Bauteil einer Kurbelwelle einer Brennkraftmaschine zugeordnet sein. Beispielsweise kann das zweite Bauteil als Teil eines Zweimassenschwungrades ausgebildet sein. Das zweite Bauteil 20 ist in der Grundform im Querschnitt L-förmig ausgebildet. Die Grundform umfasst eine erste Teilfläche 21 in Form einer Ringfläche 21, in die Ausnehmungen 22, 26 eingebracht sind. Die Ausnehmungen 22 sind in Form von Schlitzen ausgebildet. Die Ausnehmungen 22 sind verteilt um die Ringfläche 21 angeordnet, wobei die Schlitze 22 entlang einer Kreislinie ausgerichtet sind. Die erste Teilfläche 21 geht in einem äußeren Bereich in eine zweite hülsenförmige Teilfläche 23 über, wobei die zweite Teilfläche 23 vorzugsweise senkrecht zur ersten Teilfläche 21 ausgebildet ist. An einer Außenseite der zweiten Teilfläche 23 ist eine Zahnstruktur 24 ausgebildet, die radial nach außen hervorstehende Zähne aufweist. Abhängig von der gewählten Ausführungsform können anstelle der Ausnehmungen 22 weitere Ausnehmungen 26 vorgesehen sein, die seitlich bis zu einer Innenkante 25 des zweiten Bauteils 20 geöffnet sein. Eine entsprechende weitere Ausnehmung 26 ist in der Figur 3 dargestellt.

Abhängig von der gewählten Ausführungsform kann die zweite Teilfläche 23 auch auf der Innenseite der Ringfläche 21 ausgebildet sein und die Zahnstruktur 24 in radialer Richtung nach innen ragen. Die Zahnstruktur 24 weist eine Vielzahl von Zähnen auf, die verteilt auf der zweiten Teilfläche 23 angeordnet sind. Die Zähne weisen im dargestellten Ausführungsbeispiel jeweils die gleiche Form und/oder den gleichen Abstand voneinander auf.

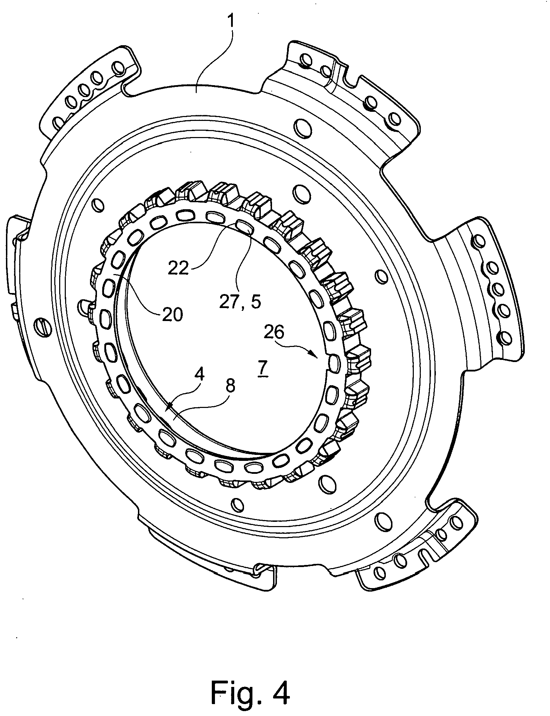

Figur 4 zeigt eine Steckverbindung zwischen dem ersten und dem zweiten Bauteil 1, 20, wobei das zweite Bauteil 20 auf den Ringkranz 4 des ersten Bauteils 1 aufgelegt ist, wobei die Verbindungselemente 5 durch die Ausnehmungen 22, 26 ragen. Endstücke 27 der Verbindungselemente 5, die über eine Oberseite des zweiten Bauteils 20 herausragen sind mithilfe eines Rollverfahrens im Querschnitt breiter geformt als der Querschnitt der Ausnehmungen 22, 26. Somit ist eine formschlüssige Verbindung zwischen dem ersten und dem zweiten Bauteil 1, 20 mithilfe eines einfachen und kostengünstigen Verfahrens bereitgestellt. Bei dem beschriebenen Verfahren wird mithilfe einer im Wesentlichen seitlich wirkenden Kraft das obere Endstücks 27 eines Verbindungselementes 5 breitgedrückt. Durch die im Wesentlichen seitlich einwirkende Kraft ist die Belastung des Verbindungselementes 5 in Richtung auf das erste Bauteil 1 reduziert. Somit ist eine Verformung des Verbindungselementes 5 unterhalb des Endstücks oder eine Verformung des ersten Bauteils 1 im Übergangsbereich zwischen dem Verbindungselement 5 und dem ersten Bauteil 1 reduziert oder vermieden.

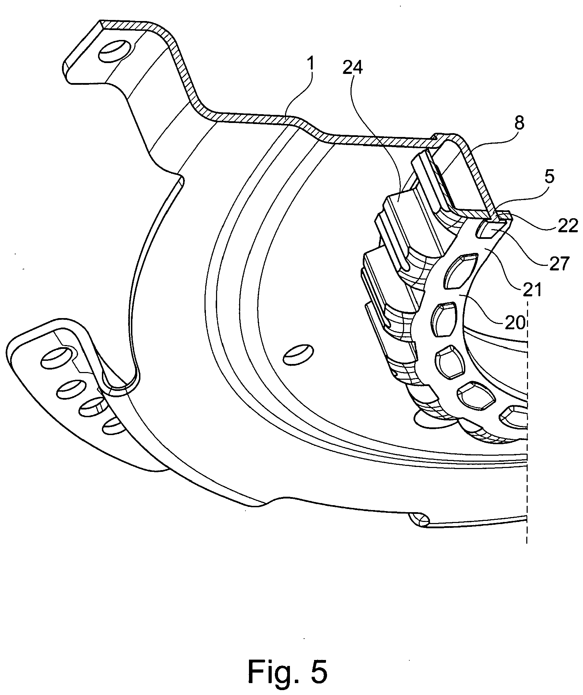

Figur 5 zeigt einen Teilquerschnitt durch eine Ausnehmung 22 der Steckverbindung der Figur 4. Dabei ist deutlich die verbreiterte Form des Endstücks 27 gegenüber einem Öffnungsquerschnitt der Ausnehmung 22 erkennbar. Aufgrund des verbreiterten Endstücks 27 kann das zweite Bauteil 20 nicht mehr vom ersten Bauteil 1 abgezogen werden. Im dargestellten Ausführungsbeispiel liegt eine Unterseite der Ringfläche 21 auf einer Oberseite der Segmente, insbesondere auf dem Mittenbereich der Segmente 6 auf. Damit wird eine sichere und stabile Lagerung des zweiten Bauteils 20 am ersten Bauteil 1 erreicht.

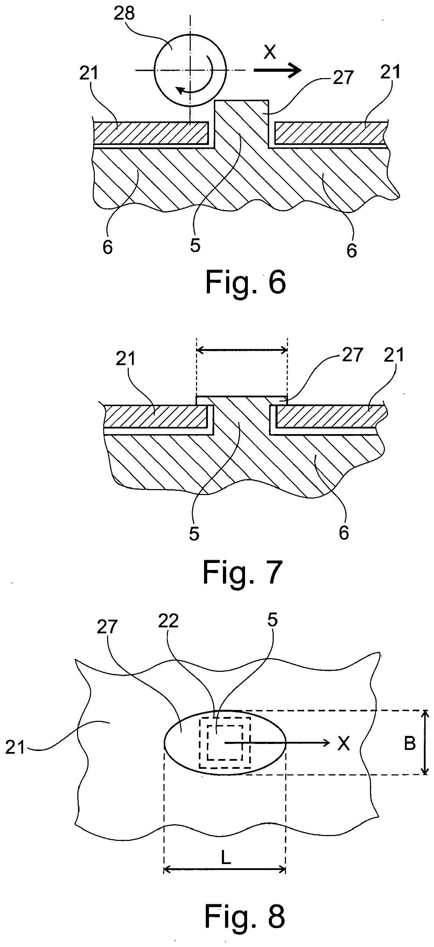

Figur 6 zeigt in einer schematischen Darstellung das Verfahren zur Verbreiterung eines Endstückes 27 eines Verbindungselementes 5. In dieser Darstellung ist das zweite Bauteil 20 auf das erste Bauteil 1 aufgelegt, wie in Figur 4 dargestellt ist. Jedoch sind die Endstücke 27 noch nicht verbreitert, sondern ragen über eine Oberseite des zweiten Bauteils 20 hinaus. Die Ringfläche 21 liegt auf einer Oberseite eines Segmentes 6 auf. Zum Verbreitern des Endstückes 27 wird mithilfe einer relativen seitlichen Bewegung X der Bauteile 1, 20 gegenüber einer Walze 28 als Verformwerkzeug das Endstück 27 verformt. Die seitliche Bewegung ist dabei vorzugsweise parallel zur Längsseite des Verbindungselementes 5. Die Verformungskraft wird über die Walze 28 ausgeübt, die sich bei einer Seitwärtsbewegung über das Endstück 27 abrollt. Die Walze 28 übt eine Verformungskraft auf die Oberseite des Endstückes 27 aus. Durch die seitliche Bewegung des Formwerkzeuges und insbesondere durch das Abrollen des Formwerkzeuges über das Endstück 27 wird die Kraftwirkung auf untere Bereiche des Verbindungselementes 5, beispielsweise gegenüber einem Verstemmen reduziert und trotzdem wird eine ausreichende Verbreiterung des Querschnittes des Endstückes 27 oberhalb des zweiten Bauteils erreicht, wie in Figur 7 dargestellt ist.

Somit erstreckt sich das verformte Endstück 27 mit seitlichen Randbereichen 28 über einen Öffnungsquerschnitt der Ausnehmungen 22, 26 hinaus und ragt bis über angrenzende Randbereich des zweiten Bauteils 20. Somit ist ein Abziehen des zweiten Bauteils 20 vom ersten Bauteil 1 nicht mehr möglich. Mithilfe des beschriebenen Verfahrens wird das Endstück 27, wie aus Figur 7 und der Figur 8 erkennbar ist, sowohl in der relativen Bewegungsrichtung X als auch quer zur relativen Bewegungsrichtung X verbreitert. Das verbreiterte Endstück 27 überlappt in allen Richtungen den Querschnitt der Ausnehmung 22. In dem dargestellten Beispiel weisen das Verbindungselement 5 und die Ausnehmung 22 einen quadratischen Querschnitt auf. In der Bewegungsachse X weist das Endstück 27 eine größere Verbreiterung (L) als senkrecht (B) dazu auf. Somit weist das Endstück 27 einen im Wesentlichen ovalen Querschnitt auf.

Mithilfe des beschriebenen Verfahrens ist es möglich, eine kostengünstige Verbindung von beispielsweise dünnwandigen Blechteilen herzustellen, ohne dass dabei die Blechteile durch eine zu große Kraftwirkung deformiert werden. Zudem ergibt sich dadurch eine Kostenersparnis, beispielsweise im Vergleich zu bekannten Steckverbindungen, da die Fügeflächen nicht durch Zerspanung hergestellt und verschweißt werden müssen.

Durch die seitlich einwirkende Kraft werden die Verbindungselemente 5 beim Verformen der Endstücke 27 gegen die Innenfläche der Ausnehmungen 22 gedrückt, so dass eine Kraftübertragung in Bereiche des ersten Bauteils reduziert werden und eine Verformung des Verbindungselementes 5 in tiefer liegenden Bereichen, beispielsweise angrenzend zum Bauteil 1 vermieden werden.

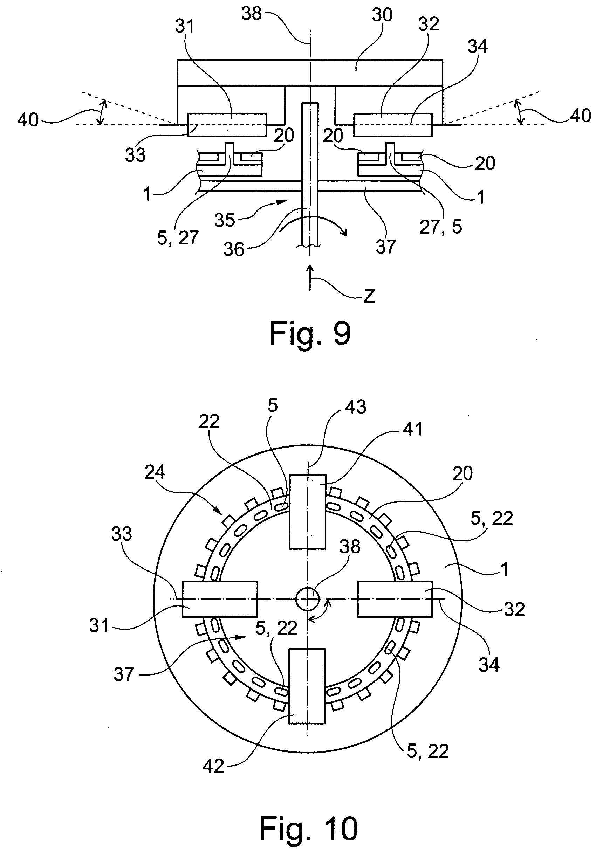

Figur 9 zeigt eine Vorrichtung zur Durchführung des erfindungsgemäßen Verfahrens. Es ist eine Halterung 30 vorgesehen, in der wenigstens eine erste Walze 31 oder, wie in dem Beispiel dargestellt, eine zweite Walze 32 drehbar gelagert sind. In dem dargestellten Ausführungsbeispiel sind die zwei Walzen 31, 32 nebeneinander angeordnet, wobei die Drehachsen 33, 34 in der Blattebene und auf einer Achse angeordnet sind. Weiterhin ist eine Drehvorrichtung 35 vorgesehen, in der das vormontierte erste und zweite Bauteil 1, 20 angeordnet sind. Die Drehvorrichtung 35 weist eine Drehwelle 36 auf, an der eine Haltevorrichtung 37 angeordnet ist. Die Haltevorrichtung 37 dient zur Befestigung wenigstens des ersten Bauteils 1. Die Ebene des ersten Bauteils 1 ist senkrecht zu einer dritten Drehachse 38 der Drehwelle 36 angeordnet. Ebenso stehen die erste und zweite Drehachse 33, 34 der ersten und der zweiten Walze 31, 32 senkrecht zur dritten Drehachse 38. Für den Rollvorgang werden das erste und das zweite Bauteil 1, 20 mit den Verbindungselementen 5 während der Drehung in festgelegten Wegstrecken in Richtung auf die erste und die zweite Walze, d.h., parallel zur dritten Drehachse 38 verfahren, wobei sich die Drehwelle 36 im Uhrzeigersinn dreht. Somit wird jedes Verbindungselement 5 mehrmals über die drehbar gelagerten Walzen 31, 32 gerollt, wobei dabei durch die Walze ein Druck auf die Endstücke 27 der Verbindungselemente 5 ausgeübt wird, so dass die Endstücke 27 Stück für Stück niedergedrückt und verbreitert werden, und damit auch das erste und zweite Bauteil. Das Niederdrücken der Verbindungselemente kann im Bereich von mm liegen. Der Vorschub der Endstücke 27 in Richtung z auf die Walzen 31, 32 kann 1/10 mm pro Umdrehung betragen. Für die Durchführung des Rollvorgangs, bei dem das Endstück 27 entsprechend verbreitert wird, wird eine Walze viele Male, beispielsweise einige 10 oder einige hundert Mal über das Verbindungsstück 5 gerollt.

Vorzugsweise wird die Drehrichtung der Drehwelle 36 wenigstens einmal oder öfters während eines Rollvorgangs gewechselt. Der gesamte Rollvorgang kann beispielsweise die Hälfte der Zeit durch eine Drehung im Uhrzeigersinn und die andere Hälfte der Zeit durch eine Drehung entgegen dem Uhrzeigersinn durchgeführt werden. Es sind jedoch auch andere Aufteilungen wie z. B. ein Drittel der Zeit im Uhrzeigersinn, ein Drittel der Zeit entgegen dem Uhrzeigersinn und ein Drittel der Zeit wieder im Uhrzeigersinn möglich. Zudem sind auch Aufteilungen wie zum Beispiel ein Viertel der Zeit im Uhrzeigersinn, ein Viertel der Zeit entgegen dem Uhrzeigersinn, ein Viertel der Zeit im Uhrzeigersinn und ein Viertel der Zeit entgegen dem Uhrzeigersinn möglich. Mithilfe der wenigstens einmaligen Umkehr der Drehungsrichtung, d.h. der Bewegungsrichtung wird eine symmetrischere Umformung des Endstückes in der Bewegungsrichtung erreicht, wie in Figur 8 dargestellt ist.

Abhängig von der gewählten Ausführungsform kann auch auf die zweite Walze 32 verzichtet werden. Zudem können auch mehr Paare von gegenüberliegend zu der Mittenachse 38 angeordneten Walzen vorgesehen sein. In einer weiteren Ausführungsform kann die Drehachse 33 der ersten und/oder der zweiten Walze 31, 32 radial außen um eine Winkel 40 geschwenkt nach oben in Bezug auf eine Ebene senkrecht zur dritten Drehachse 38 angeordnet sein. Der Winkel 40 kann im Bereich von bis zu 20° liegen. Abhängig von der Kontur des Verbindungselementes können Winkel von 10° oder Winkel von 3° oder kleiner vorteilhaft sein.

Figur 9 zeigt eine schematische Aufsicht auf eine Anordnung mit vier Walzen 31, 32, 41, 42 die jeweils paarweise gegenüberliegend zur dritten Drehachse 38 angeordnet sind. Die dritte und vierte Walze 41, 42 sind entlang einer weiteren Drehachse 43 drehbar in der Halterung 30 gelagert.

Mithilfe der geneigten Anordnung der Drehachsen 33, 34 der ersten oder zweiten Walze 31 oder 32 wird eine Verbesserung der Verformung der Verbindungselemente 5 erreicht. Auf diese Weise wird verhindert, dass die Verbindungselemente 5 seitlich nach innen in Richtung auf die dritte Drehachse 38 beim Umformen durch den Rollvorgang verbogen werden.

### Bezugszeichenliste

- a.: erstes Bauteil
- b.: Ringscheibe
- c.: Flansch
- d.: Ringkranz
- e.: Verbindungselement
- f.: Segmente
- g.: Öffnung
- h.: Hülse
- i.: Fläche
- j.: Endfläche
- k.: Zweite Endfläche
- l.: Bereich
- m.: Erster Seitenbereich
- n.: Zweiter Seitenbereich
- o.: Erster Rundungsbereich
- p.: Zweiter Rundungsbereich
- 20: zweites Bauteil
- 21: Ringfläche
- 22: Ausnehmung
- 23: Zweite Teilfläche
- 24: Zahnstruktur
- 25: Innenkante
- 26: Weitere Ausnehmung
- 27: Endstück
- 28: Verformwerkzeug
- 30: Halterung
- 31: erste Walze
- 32: zweite Walze
- 33: erste Drehachse
- 34: zweite Drehachse
- 35: Drehvorrichtung
- 36: Drehwelle
- 37: Haltevorrichtung
- 38: dritte Drehachse
- 40: Winkel
- 41: dritte Walze
- 42: vierte Walze
- 43: vierte Drehachse

## Patentansprüche

1. Steckverbindung zur drehschlüssigen Verbindung eines ersten Bauteils (1) mit einem zweiten Bauteil (20) insbesondere in einem Kupplungsaggregat, wobei das erste Bauteil wenigstens ein Verbindungselement (5) aufweist, wobei das Verbindungselement (5) durch eine Ausnehmung (22, 26) des zweiten Bauteils (20) ragt, wobei das Verbindungselement (5) oberhalb des zweiten Bauteils ein verbreitertes Endstück (27) aufweist, wobei ein Querschnitt des Endstückes (27) breiter als ein Querschnitt der Ausnehmung (22, 26) ist, wobei die Verbreiterung des Endstücks (27) mithilfe eines Rollverfahrens hergestellt ist und wobei das erste Bauteil (1) einen Ringkranz (4) mit Zähnen (5) aufweist, wobei die Zähne (5) aus einer Ebene des ersten Bauteils (1) herausragen und wobei die Zähne (5) Verbindungselemente darstellen **dadurch gekennzeichnet, dass** die Verbreiterung des Endstücks (27) mithilfe eines Rollverfahrens hergestellt ist und dass das Endstück (27) des Verbindungselementes (5) einen im Wesentlichen ovalen Querschnitt aufweist, wobei das Endstück (27) in Umfangsrichtung des Ringkranzes eine größere Verbreiterung (L) als senkrecht (B) dazu aufweist.

2. Steckverbindung nach Anspruch 1, **dadurch gekennzeichnet, dass** die Ausnehmung (26) seitlich offen ist.

3. Steckverbindung nach Anspruch 1 oder 2, **dadurch gekennzeichnet, dass** das zweite Bauteil (20) in Form eines Zahnkranzes, insbesondere eines Mitnehmerkranzes ausgebildet ist.

4. Steckverbindung nach Anspruch 1, **dadurch gekennzeichnet, dass** der Ringkranz (4) zwischen den Zähnen (5) Zahnsegmente (6) aufweist, die nach oben über die Ebene des ersten Bauteils (1) hinausragen.

5. Steckverbindung nach Anspruch 3, **dadurch gekennzeichnet, dass** der Zahnkranz im Querschnitt abgewinkelt ausgebildet ist, dass eine erste Teilfläche (21) des Zahnkranzes im wesentlichen parallel zur Oberseite des ersten Bauteils angeordnet ist, dass in der ersten Teilfläche die Ausnehmungen (22, 26) eingebracht sind, dass die zweite Teilfläche (23) in Richtung auf das erste Bauteil (1) abgewinkelt ist, wobei auf der zweiten Teilfläche (23) eine Zahnstruktur (24) des Zahnkranzes ausgebildet ist.

6. Steckverbindung nach Anspruch 5, **dadurch gekennzeichnet, dass** die zweite Teilfläche (23) auf einer Innenseite des Zahnkranzes ausgebildet ist, wobei die Zahnstruktur (24) nach innen ragt, oder die zweite Teilfläche (23) auf einer Außenseite des Zahnkranzes ausgebildet ist, wobei die Zahnstruktur (24) nach außen ragt.

7. Steckverbindung nach den Ansprüchen 3 und 4, **dadurch gekennzeichnet, dass** der Zahnkranz auf den Zahnsegmenten aufliegt.

8. Verfahren zur Herstellung einer Steckverbindung nach einem der vorhergehenden Ansprüche, wobei die Bauteile (1, 20) zusammengefügt werden, indem das Verbindungselement (5) des ersten Bauteils (1) durch die Ausnehmung des zweiten Bauteils (20) geführt wird, eine Walze (28, 31, 32, 41, 42) über ein Endstück (27) des Verbindungselementes (5) gerollt wird, wobei wenigstens teilweise ein Druck in seitlicher Richtung auf das Endstück (27) ausgeübt wird, so dass eine Verbreiterung des Endstückes (27) erreicht wird und die Walze im Wesentlichen entlang einer Längsseite des Verbindungselements (5) über das Endstück (27) des Verbindungselements (5) gerollt wird, **dadurch gekennzeichnet, dass** die Walze so über das Endstück (27) gerollt wird, dass das Endstück (27) des Verbindungselementes (5) einen im Wesentlichen ovalen Querschnitt aufweist.

9. Verfahren nach Anspruch 8, **dadurch gekennzeichnet, dass** die Bauteile in eine Rotation versetzt werden, und dass das rotierende Verbindungselement über die drehbar gelagerte Walze bewegt wird.

10. Verfahren nach einem der Ansprüche 8 und 9, **dadurch gekennzeichnet, dass** eine relative Bewegungsrichtung des Rollens zwischen der Walze und der Bauteile wenigstens einmal geändert wird.

11. Verfahren nach einem der Ansprüche 9 oder 10, **dadurch gekennzeichnet, dass** das Verbindungselement während der Rotation in Richtung Walze bewegt wird.

12. Verfahren nach einem der Ansprüche 8 bis 11, **dadurch gekennzeichnet, dass** eine Drehachse der Walze in radialer Richtung in Bezug auf eine mittige Rotationsachse der Bauteile um einen Winkel geneigt in Richtung der Bauteile angeordnet ist.

## Claims

1. Plug-in connection for connecting a first component (1) to a second component (20) in a rotationally locking manner, in particular in a clutch assembly, wherein the first component has at least one connecting element (5), wherein the connecting element (5) protrudes through a recess (22, 26) in the second component (20), wherein the connecting element (5) has a widened end piece (27) above the second component, wherein a cross section of the end piece (27) is wider than a cross section of the recess (22, 26), wherein the widened portion of the end piece (27) is produced with the aid of a rolling method, and wherein the first component (1) has an annular rim (4) with teeth (5), wherein the teeth (5) protrude from a plane of the first component (1), and wherein the teeth (5) constitute connecting elements, **characterized in that** the widened portion of the end piece (27) is produced with the aid of a rolling method, and **in that** the end piece (27) of the connecting element (5) has a substantially oval cross section, wherein the end piece (27) has a larger widened portion (L) in the circumferential direction of the annular rim than perpendicular (B) thereto.

2. Plug-in connection according to Claim 1, **characterized in that** the recess (26) is open at the side.

3. Plug-in connection according to Claim 1 or 2, **characterized in that** the second component (20) is designed in the form of a toothed rim, in particular a driver rim.

4. Plug-in connection according to Claim 1, **characterized in that** the annular rim (4) has toothed segments (6) between the teeth (5), which toothed segments protrude upwards beyond the plane of the first component (1).

5. Plug-in connection according to Claim 3, **characterized in that** the toothed rim is of angled design in cross section, **in that** a first partial surface (21) of the toothed rim is arranged substantially parallel to the top side of the first component, **in that** the recesses (22, 26) are made in the first partial surface, **in that** the second partial surface (23) is angled in the direction of the first component (1), wherein a toothed structure (24) of the toothed rim is formed on the second partial surface (23).

6. Plug-in connection according to Claim 5, **characterized in that** the second partial surface (23) is formed on an inner side of the toothed rim, wherein the toothed structure (24) protrudes inwards, or the second partial surface (23) is formed on an outer side of the toothed rim, wherein the toothed structure (24) protrudes outwards.

7. Plug-in connection according to Claims 3 and 4, **characterized in that** the toothed rim rests on the toothed segments.

8. Method for producing a plug-in connection according to one of the preceding claims, wherein the components (1, 20) are joined by the connecting element (5) of the first component (1) being passed through the recess in the second component (20), a roller (28, 31, 32, 41, 42) being rolled over an end piece (27) of the connecting element (5), wherein a pressure is exerted at least partially on the end piece (27) in the lateral direction, so that a widened portion of the end piece (27) is achieved, and the roller being rolled substantially along a longitudinal side of the connecting element (5) over the end piece (27) of the connecting element (5), **characterized in that** the roller is rolled over the end piece (27) such that the end piece (27) of the connecting element (5) has a substantially oval cross section.

9. Method according to Claim 8, **characterized in that** the components are made to rotate, and **in that** the rotating connecting element is moved over the rotatably mounted roller.

10. Method according to either of Claims 8 and 9, **characterized in that** a relative movement direction of the rolling between the roller and the components is changed at least once.

11. Method according to either of Claims 9 and 10, **characterized in that** the connecting element is moved in the direction of the roller during the rotation.

12. Method according to one of Claims 8 to 11, **characterized in that** a rotation axis of the roller is arranged in the radial direction in relation to a central rotation axis of the components through an angle inclined in the direction of the components.

## Revendications

1. Liaison par emboîtement pour une liaison solidaire en rotation d'une première pièce (1) et d'une deuxième pièce (20), en particulier dans un ensemble d'embrayage, dans laquelle la première pièce présente au moins un élément de liaison (5), dans laquelle l'élément de liaison (5) pénètre dans un évidement (22, 26) de la deuxième pièce (20), dans laquelle l'élément de liaison (5) comporte une pièce d'extrémité élargie (27) au-dessus de la deuxième pièce, dans laquelle une section transversale de la pièce d'extrémité (27) est plus large qu'une section transversale de l'évidement (22, 26), dans laquelle l'élargissement de la pièce d'extrémité (27) est réalisé à l'aide d'un procédé de laminage et dans laquelle la première pièce (1) comporte une couronne (4) munie de dents (5), dans laquelle les dents (5) font saillie par rapport à un plan de la première pièce (1) et dans laquelle les dents (5) constituent des éléments de liaison, **caractérisée en ce que** l'élargissement de la pièce d'extrémité (27) est réalisé au moyen d'un procédé de laminage et **en ce que** la pièce d'extrémité (27) de l'élément de liaison (5) présente une section transversale sensiblement ovale, dans laquelle la pièce d'extrémité (27) présente un élargissement (L) plus grand dans la direction circonférentielle de la couronne que perpendiculairement (B) à celle-ci.

2. Liaison par emboîtement selon la revendication 1, **caractérisée en ce que** l'évidement (26) est ouvert latéralement.

3. Liaison par emboîtement selon la revendication 1 ou 2, **caractérisée en ce que** la deuxième pièce (20) se présente sous la forme d'une couronne dentée, en particulier une couronne d'entraînement.

4. Liaison par emboîtement selon la revendication 1, **caractérisée en ce que** la couronne (4) comporte des segments de dents (6) entre les dents (5), qui font saillie vers le haut au-delà du plan de la première pièce (1).

5. Liaison par emboîtement selon la revendication 3, **caractérisée en ce que** la couronne dentée est réalisée de manière coudée en section transversale, **en ce qu'**une première surface partielle (21) de la couronne dentée est disposée sensiblement parallèlement à la face supérieure de la première pièce, **en ce que** les évidements (22,26) sont ménagés dans la première surface partielle, **en ce que** la deuxième surface partielle (23) est coudée dans la direction de la première pièce (1), dans laquelle une structure de dent (24) de la couronne dentée est réalisée sur la deuxième surface partielle (23).

6. Liaison par emboîtement selon la revendication 5, **caractérisée en ce que** la deuxième surface partielle (23) est formée sur une face intérieure de la couronne dentée, la structure de dent (24) faisant saillie vers l'intérieur, ou **en ce que** la deuxième surface partielle (23) est réalisée sur une face extérieure de la couronne dentée, la structure de dent (24) faisant saillie vers l'extérieur.

7. Liaison par emboîtement selon les revendications 3 et 4, **caractérisée en ce que** la couronne dentée repose sur les segments de dents.

8. Procédé de réalisation d'une liaison par emboîtement selon l'une des revendications précédentes, **caractérisé en ce que** les pièces (1, 20) sont assemblées en guidant l'élément de liaison (5) de la première pièce (1) à travers l'évidement de la deuxième pièce (20), en faisant rouler un cylindre (28, 31, 32, 41, 42) sur une pièce d'extrémité (27) de l'élément de liaison (5), dans lequel une pression latérale est exercée au moins partiellement sur la pièce d'extrémité (27) de manière à obtenir un élargissement de la pièce d'extrémité (27) et à faire rouler le cylindre sensiblement le long d'un côté longitudinal de l'élément de liaison (5) sur la pièce d'extrémité (27) de l'élément de liaison (5), **caractérisé en ce que** le cylindre est amené à rouler sur la pièce d'extrémité (27) de manière à ce que la pièce d'extrémité (27) de l'élément de liaison (5) présente une section transversale sensiblement ovale.

9. Procédé selon la revendication 8, **caractérisé en ce que** les pièces sont mises en rotation et **en ce que** l'élément de liaison tournant est déplacé sur le cylindre monté tournant.

10. Procédé selon l'une des revendications 8 et 9, **caractérisé en ce qu'**une direction de déplacement relative du roulement entre le cylindre et les pièces est modifiée au moins une fois.

11. Procédé selon l'une des revendications 9 ou 10, **caractérisé en ce que** l'élément de liaison est déplacé dans la direction du cylindre pendant la rotation.

12. Procédé selon l'une des revendications 8 à 11, **caractérisé en ce qu'**un axe de rotation du cylindre est disposé dans la direction radiale par rapport à un axe de rotation central des pièces, de manière inclinée d'un certain angle dans la direction des pièces.
